(19) Europäisches Patentamt / European Patent Office / Office européen des brevets

(11) **EP 3 671 107 A1**

(12) **EUROPEAN PATENT APPLICATION**

(43) Date of publication:
**24.06.2020   Bulletin 2020/26**

(51) Int Cl.:
**G01B 7/16** *(2006.01)*          **G01B 7/287** *(2006.01)*
**G01L 1/22** *(2006.01)*          *G06F 1/16* *(2006.01)*

(21) Application number: **18213819.8**

(22) Date of filing: **19.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universität Wien
1010 Vienna (AT)**

(72) Inventors:
• **Dragosits, Mathias
1090 Wien (AT)**
• **Köhler, Philipp Martin
1090 Wien (AT)**

(74) Representative: **Grünecker Patent- und Rechtsanwälte
PartG mbB
Leopoldstraße 4
80802 München (DE)**

(54) **STRAIN GAUGE CURVATURE MEASUREMENT TOOL FOR 3D PRECISION POSITION CONTROL OF THIN FOILS**

(57)     Strain gauge measurement blanket (60) comprising:
a substrate (21) having an upper surface and a lower surface;
a plurality of matrices (12, 12U, 12L, 23, 25) of strain gauge sensors (10) provided on the substrate (21); each matrix (12, 12U, 12L, 23, 25) having a plurality of strain gauge sensors (10), all strain gauge sensors (10) within one matrix (12, 12U, 12L, 23, 25) being aligned into the same direction, respectively;
said plurality of matrices (12, 12U, 12L, 23, 25) of strain gauge sensors (10) including at least a first, a second, a third and a fourth matrix (12, 12U, 12L, 23, 25) of strain gauge sensors (10);
the first and the second matrix (12, 12U, 12L, 23, 25) of strain gauge sensors (10) layered directly on top of each other and being provided directly on the upper surface of the substrate (21);
the third and the fourth matrix (12, 12U, 12L, 23, 25) of strain gauge sensors (10) layered directly on top of each other and being provided directly on the lower surface the substrate (21);
the strain gauge sensors (10) of the first matrix (12, 12U, 12L, 23, 25) being oriented perpendicular to the strain gauge sensors (10) of the second matrix (12, 12U, 12L, 23, 25);
the strain gauge sensors (10) of the third matrix (12, 12U, 12L, 23, 25) being oriented perpendicular to the strain gauge sensors (10) of the fourth matrix (12, 12U, 12L, 23, 25).

FIG. 8

## Description

### Field of the Invention

The present invention relates to the field of strain gauge sensors, SGS.

### Background of the Invention

Currently strain gauge sensors are primarily used to measure small displacements in solid mechanic components such as rods and beams, and transform this data to stress. With the assumption, that for small deflections the curvature of the surface is negligible and applying Hook's Law with known Young's modulus, this measurement is quite precise with an accuracy of $\approx 1\%$.

Strain Gauge Sensors exploit that the specific resistance changes with length variation of the conductor. Therefore, a conductor in meander like form is applied to a surface, to measure its length variation, but the signal of the resistance variation is amplified by the number of loops.

There are overlapping strain gauge sensors systems, that are able to simultaneously measure stress in multiple directions; pull, shear and torsion. This is commonly used in high precision tools in mills to sense part edges and surfaces on specific points. One example is given by.

https://www.renishaw.com/en/messtaster-mit-dehnmessstreifen-hoechste-antastgenauigkeit-und-messleistung-bei-der-formmessung-5-achsig-gefraester-bauteile-fuer-die-luft-und-raumfahrtindustrie--14592.

### Summary of the Invention

In view of the above, the present invention provides a solution to the above-mentioned limitations and problems.

The invention provides a strain gauge measurement blanket comprising: a substrate having an upper surface and a lower surface; a plurality of matrices of strain gauge sensors provided on the substrate; each matrix having a plurality of strain gauge sensors, all strain gauge sensors within one matrix being aligned into the same direction, respectively; said plurality of matrices of strain gauge sensors including at least a first, a second, a third and a fourth matrix of strain gauge sensors; the first and the second matrix of strain gauge sensors layered directly on top of each other and being provided directly on the upper surface of the substrate; the third and the fourth matrix of strain gauge sensors layered directly on top of each other and being provided directly on the lower surface the substrate; the strain gauge sensors of the first matrix being oriented perpendicular to the strain gauge sensors of the second matrix; the strain gauge sensors of the third matrix being oriented perpendicular to the strain gauge sensors of the fourth matrix.

A typical known strain gauge comprises a rather long, thin conductive strip in a meander-like pattern of parallel lines. The direction indicated by said parallel lines, i.e. the direction parallel to said lines should be understood as the main direction of the strain gauge or just the direction of the strain gauge. This direction typically also coincides with that end of the strain gauge where electrodes are provided for reading out the strain gauge.

The blanket comprises two matrices of strain gauge sensors wherein within each matrix the strain gauge sensors are all oriented into the same direction, wherein the direction should be understood as described above. The two matrices of strain gauge sensors may also be viewed as a pair of strain gauge sensors. The term matrix should indicate a thin film or layer on which strain gauge sensors are provided in a matrix-like, grid-like, or array-like fashion, i.e. in some regular pattern following the surface of said layer. Within the pair of matrices, the strain gauge sensors of the first matrix, say the lower matrix, are oriented perpendicular to the strain gauge sensors of the second matrix. Said pair of matrices is provided on one surface; say the upper surface of a substrate. A second pair of matrices comprises a third and a fourth matrix of strain gauge sensors. Said second pair is provided on the other surface of the substrate, i.e. in case the first pair was provided on the upper surface, the second pair is provided on the lower surface of the substrate and vice versa. For the second pair, the strain gauge sensors of the third matrix are oriented perpendicular to the strain gauge sensors of the fourth matrix. Within the respective matrix, the strain gauge sensors are oriented into the same direction. By using at least four matrices of strain gauge sensors, i.e. one pair on the upper surface of the substrate, the other pair on the lower surface of the substrate, it is provided that all curvature coordinates of the substrate, which is flexible or bendable, may be measured and later may be transformed into appropriate coordinates. The matrices, i.e. the grid then provide for how finely the curvature is measured.

In the strain gauge measurement blanket as described above the strain gauge sensors within one matrix are for example the same; in particular, the strain gauge sensors of all matrices are for example the same.

The strain gauge sensors may be well-known strain gauge sensors of one predefined size.

In the strain gauge measurement blanket as described above the strain gauge sensors of each matrix may be adjacently arranged.

The strain gauge sensors of each matrix therefore do not overlap but may be adjacently arranged. Thereby the best coverage of on layer of thin film is accomplished.

In the strain gauge measurement blanket as described above the substrate is a polyethylene terephthalate, PET, foil, in particular the PET foil having a stiffness of tensile modulus -1000-10000 MPa.

A PET substrate is easily available and together with the two pairs of matrices as described above, it forms a light and flexible blanket which may be applicable to measure the curvature of curved surfaces by overlaying the blanket on the curvature to be measured.

The invention further provides a system for curvature measurement comprising a strain gauge measurement blanket as described above, a multiplexer connected to the sensors of the strain gauge measurement blanket; a resistance meter connected to the multiplexer; a control unit connected to the resistance meter; and a clock connected at least to the control unit and the multiplexer.

The system includes the strain gauge measurement blanket together with equipment for measuring the curvature.

In the system as described above, the system may be configured to conduct the curvature measurement using the strain gauge measurement blanket in real-time.

By measurement in real-time, correction parameters for curvature, e.g. correction of distortion, correction of pressure etc. may be calculate also in real-time since the measurement data is available in real time.

In the system as describe above, the system may be configured to be integrated into one or more of a flexible display of a mobile device such as a smartphone, a mobile phone, a tablet, a phablet, a mobile computer, a virtual reality, VR, control, a water bed mattress with active pressure compensation, or a portable positron emission tomography scanner.

In the system as described above, the substrate may be part of the flexible display.

In the system as described above, the blanket may be placed directly onto an object of which a curvature should be quickly determined. Alternatively, the substrate may be integrated into a respective device such as a mobile device, etc. as listed above. Thereby, the blanket becomes a part of said mobile device etc. In particular, the substrate may be part of a flexible display to measure and to correct the curvature and thereby curvature induced distortions of said display.

The invention further provides a method of manufacturing a strain gauge measurement blanket comprising the steps of:

> providing a substrate having an upper surface and a lower surface;
> providing a first thin conductive film on the upper surface of the substrate;
> etching a plurality of strain gauge sensors into the first thin conductive film in a matrix; all of said strain gauge sensors within the first conductive film being aligned into the same direction, respectively;
> providing a second thin conductive film directly on the first thin conductive film;
> etching a plurality of strain gauge sensors into the second thin conductive film in a matrix; all of said strain gauge sensors within the second conductive film being aligned into the same direction, respectively;
> providing a third thin conductive film on the lower surface of the substrate;
> etching a plurality of strain gauge sensors into the third thin conductive film in a matrix; all of said strain gauge sensors within the third conductive film being aligned into the same direction, respectively;
> providing a fourth thin conductive film directly on the third thin conductive film;
> etching a plurality of strain gauge sensors into the fourth thin film in a matrix; all of said strain gauge sensors within the fourth thin conductive film being aligned into the same direction, respectively;
> the strain gauge sensors of the first thin conductive film being oriented perpendicular to the strain gauge sensors of the second thin conductive film;
> the strain gauge sensors of the third thin conductive film being oriented perpendicular to the strain gauge sensors of the fourth thin conductive film.

In the method as described above, the strain gauge sensors within one thin conductive film may be the same, in particular all of the strain gauge sensors may be the same.

In the method as described above, the strain gauge sensors within each thin conductive film may be adjacently arranged.

In the method as described above the substrate may be a polyethylene terephthalate, PET, foil, in particular the PET foil having a stiffness of tensile modulus -1000-10000 MPa.

The method as described above may further comprise the step of providing further thin conductive films on the upper surface and/or on the lower surface of the substrate, and etching a plurality of strain gauge sensors into the respective thin conductive film in a matrix; all of said strain gauge sensors within the respective conductive film being aligned into the same direction, respectively; wherein the strain gauge sensors of one further thin conductive film may be oriented perpendicular to the strain gauge sensor of another thin conductive film directly underneath the further conductive film.

**Brief Description of the Drawings**

Figure 1A:   Schematic view of a strain gauge sensor.

Figure 1B   Schematic view of a strain gauge sensor indicating the effects of tension as well as compression on the strain gauge sensor.

Figure 2   Schematic illustration of a cantilever deflected under influence of a force.

Figure 3A   Schematic illustration of an arbitrarily deformed element in three dimensions.

Figure 3B   Schematic illustration of the element of Fig. 3A in two dimensions.

Figure 4   Schematic illustration of a detail of the element of Fig. 3A and 3B.

Figure 5   Schematic illustration of a unit cell of a strain gauge for the present disclosure.

Figure 6   Schematic illustration of a matrix of unit cells of strain gauge sensors, representing one layer, according to the present disclosure.

Figure 7   Schematic illustration of a pair of matrices, each matrix similar to the matrix illustrated in Fig. 6, according to the present disclosure.

Figure 8   Schematic illustration of a strain gauge measurement blanket according to the present disclosure.

Figure 9   Schematic illustration of a system for curvature measurement according to the present disclosure.

**Detailed Description**

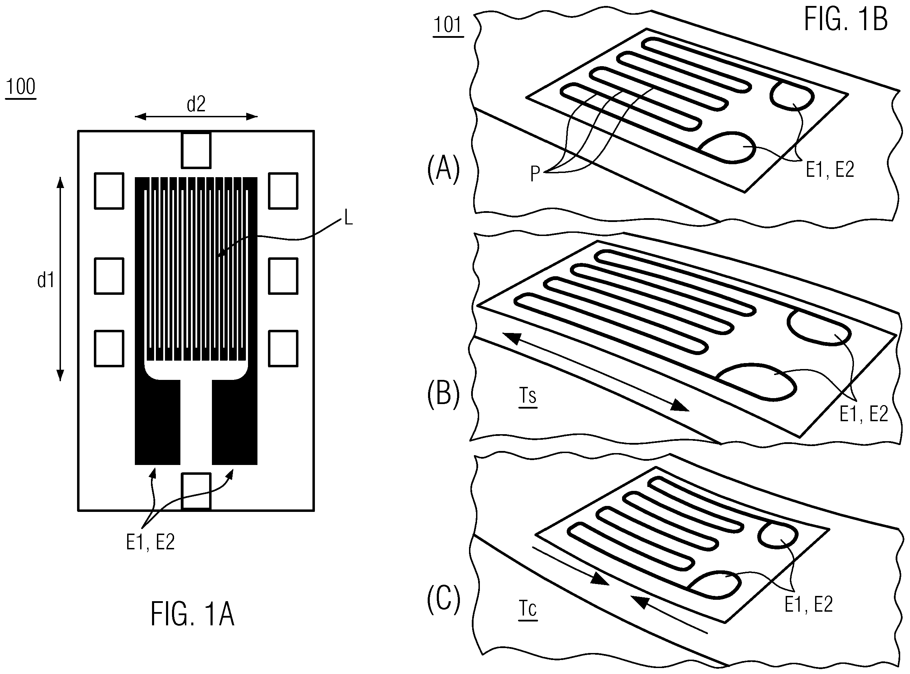

Figure 1A illustrates a schematic view of a common strain gauge sensor 100. The strain gauge sensor 100 comprises a plurality of thin readout lines L on a thin film. All of said readout lines L of Fig. 1A are aligned to be substantially parallel to direction d1 indicated in Fig. 1A. Said readout lines L all have substantially the same length. Perpendicular to direction d1 the readout lines L are provided in a meander-like shape extending along direction $d2$. Further, Fig. 1A illustrates readout tabs or electrodes E1 and E2, which are also provided along the direction d1. That is, the readout direction of the strain gauge sensor 100 of Fig. 1 is the same as the direction to which the readout lines L are oriented.
Figure 1B shows a schematic view of a strain gauge sensor 101 indicating the effects of tension as well as compression on the strain gauge sensor. Fig. 1B shows in its subfigure (A) readout lines arranged in a pattern P similar to the pattern shown in Fig. 1A. In Fig. 1B in the middle, subfigure (B) illustrates the effect of tension Ts as shown in Fig. 1B. Under the influence of tension Ts the strain gauge sensor 101 elongates. Due to the elongation, the thickness of the strain gauge sensor 101, i.e. perpendicular to the force of tension Ts, becomes smaller. The change of resistance is proportional to the change of thickness such that a smaller thickness means a smaller resistance. Fig. 1B, in subfigure (C) illustration the opposite effect. A compression force $Tc$ is acting on the strain gauge sensor 101. Due to said compression force $Tc$ the thickness of the strain gauge sensor 101 perpendicular to the direction of the force $Tc$ increases. Due to the proportionality of the change of resistance and the change of thickness, the resistance will increase for that scenario.

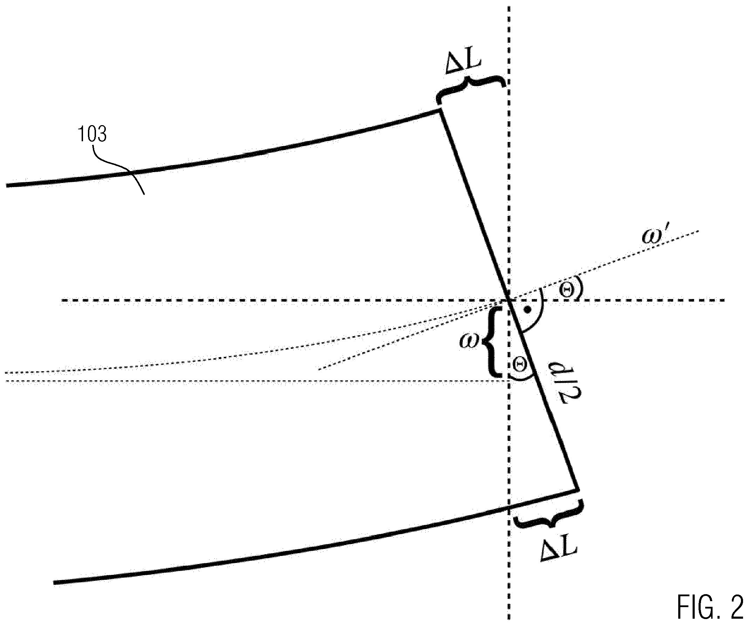

Figure 2 illustrates a schematic illustration of a cantilever 103 deflected under influence of a static force. The deflection under force is discussed as follows. One should first introduce a one-dimensional problem and then later extrapolate to higher dimensions. Here, it is assumed that the cantilever 103 is a beam anchored at one end, which may also be referred as a cantilevered fiber. Said cantilever or fiber 103 in Fig. 2 has a length L along the x-axis, i.e. horizontal axis. It further has a deflection $\omega$ along the y-axis, i.e. vertical axis, caused by a static force F. The fiber further has a thickness $d$ and a stiffness $EI$, where $E$ is the Young's modulus and $I$ is the 2nd moment of inertia. The 2nd moment of inertia is also called 2nd moment of area, moment of inertia of plane area, area moment of inertia, or second area moment.
Then we start with the simplified differential equation given by

$$\omega'' = -\frac{Fx}{EI} \qquad (1)$$

with boundary conditions

$$\omega' = 0 \text{ and } \omega(0) = 0. \qquad (2)$$

Integrating equation (1) a first time yields

$$\omega'(x) = \frac{Fx^2}{2EI} + c_1 \qquad (3)$$

where $c_1$ is an integration constant. Afterwards, integrating equation (3), i.e. integrating equation (1) for the second time, eventually yields

$$\omega(x) = \frac{Fx^3}{6EI} + c_1 x + c_2, \qquad (4)$$

where $c_2$ is a second integration constant. Owing the boundary conditions, these constants are $c_1 = c_2 = 0$ for the given conditions. It is further assumed that the neutral fiber's length does not change with deflection, but lengths

$$L_{lower} = L + \Delta L \text{ and } L_{upper} = L - \Delta L \qquad (5)$$

will increase and decrease respectively, where L is the length of the fiber 103 along the x-axis, defined above.

Fig. 2 further illustrates the beam deflection in detail. The outermost corners, i.e. $L_{lower}$ and $L_{upper}$, of the fiber 103 are either elongated or shortened by $\Delta L$. The other parameters, in particular $\omega$ and $\omega'$ shown in Fig. 2 were also introduced, above. Here, $\theta$ is the angle of the slope of $\omega'$. Taking the angle $\theta$ as shown in Fig. 2, one finds

$$\tan\theta = \omega' = \frac{FL^2}{2EI} \text{ and } \tan\theta\frac{d}{2} = \Delta L . \qquad (6)$$

In other words, the change of length $\Delta L$ is determined by

$$\Delta L = \frac{FL^2 d}{4EI} \qquad (7)$$

Furthermore, for $L_{lower}$ and $L_{upper}$ it is obtained

$$L_{lower,upper} = L\left(1 \pm \frac{FLd}{4EI}\right). \qquad (8)$$

Summarizing, the parameter $L_{lower}$ and $L_{upper}$ have been determined.

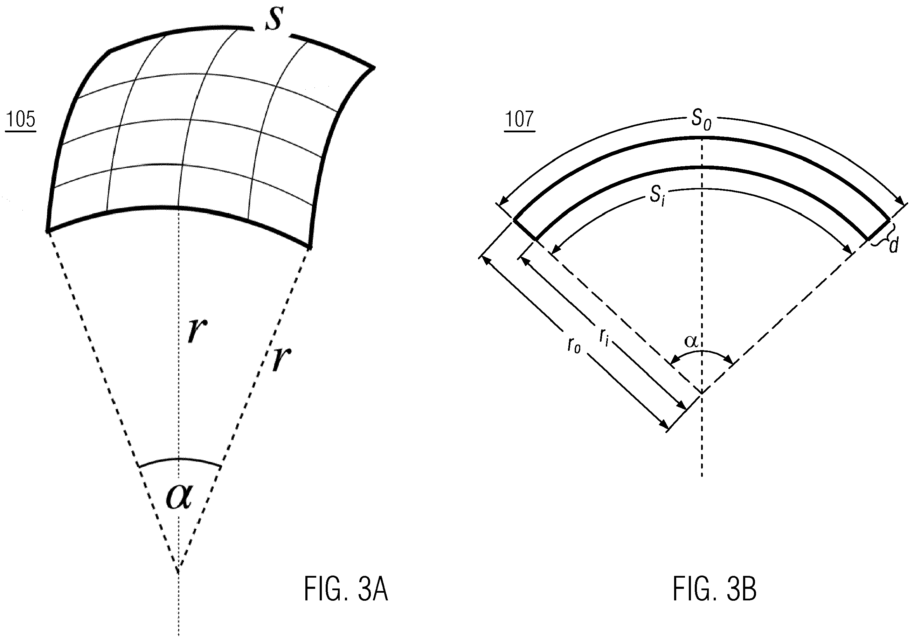

Figure 3A illustrates schematically an arbitrarily deformed element 105, but unlike Fig. 2 now in three dimensions. That is, Fig. 3A illustrates the arbitrarily deformed element 105 having a curvature s and opening angle $\alpha$, and radius r. The transformation to Cartesian coordinates then is as follows.

Within the same context, Figure 3B illustrates an element 107. Element 107 corresponds to element 105 of Fig. 3A but projected in two dimensions. That is, Fig. 3B illustrates element 107 corresponding to element 105 as shown in Fig. 3A and correspondingly having, in two dimensions, an inner radius $r_i$ and an inner curvature $s_i$ as well as an outer radius $r_o$ and outer curvature $s_o$, and thickness of the substrate d.

In order to obtain a transformation of coordinates, from the measured curvatures to Cartesian coordinates the following is considered. A small element *dA* of the curved surface *A* is selected, said small element *dA* with a rectangular projection onto the original undeformed surface $A_0$. It is further assumed that this element may be approximated as being a part of a hollow sphere with the inner radius $r_i$ and the outer radius $r_o$.

All elements are continuously and smoothly connected to each other. Let us call the length of the outer curve $s_o = L + \Delta L$ and the inner curve $s_{oi} = L - \Delta L$, the element thickness $t \equiv r_o - r_i$ and the enclosed angle $\alpha$.

A basic coordinate transformation is given by

$$A\vec{x} = \vec{y} \tag{9}$$

where A is an invertible 3x3 matrix and $\vec{x}, \vec{y} \in R^3$.

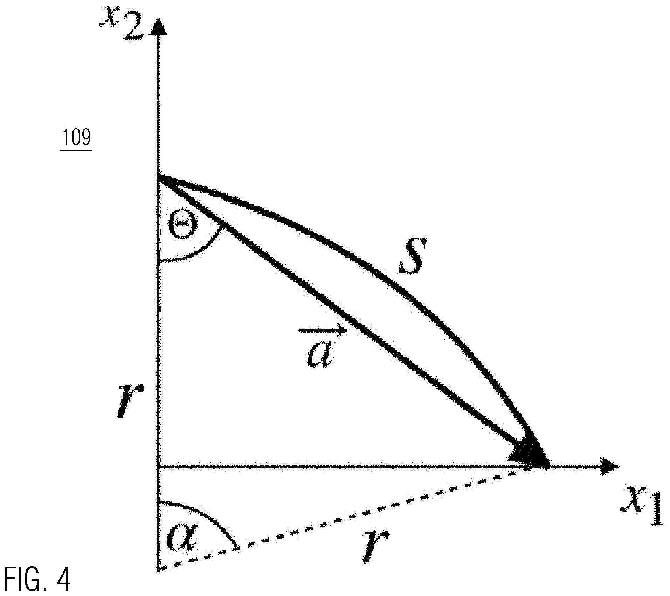

Thus, it is aimed at finding vectors $\vec{a}$ and thereby new edge positions of the element 105. For that purpose, Figure 4 illustrates a detail of the element of Fig. 3A and 3B. The position vector $\vec{a}$ is fully defined by the radius r, the curvature *s* and opening angle $\alpha$, yielding an angle $\theta$. Referring to Fig. 4 one finds the relations

$$r_i\alpha = s_i \text{ and } r_o\alpha = s_o \tag{10}$$

One deduces that $s_o = s_i \varepsilon$ with $\epsilon = \frac{L+2\Delta L}{L}$ and therefore with $d = r_o - r_i$

$$\alpha = \frac{s_i}{d}(\epsilon - 1)$$

To obtain vector $\vec{a}$ from Fig. 4, a relation between angle $\theta$ and $\alpha$ can be obtained, with *a* being the norm of the vector $\vec{a}$. Applying the law of cosines yields

$$a_0 = \sqrt{2r_0^2(1 - \cos\alpha)}, \tag{11}$$

and thus with $\theta = \frac{\pi - \alpha}{2}$

$$\overrightarrow{\alpha_1} = \alpha_0 \begin{pmatrix} \sin\theta \\ \cos\theta \end{pmatrix} \tag{12}$$

The total position vector $\vec{x}$ then is a linear combination of the two vectors $\overrightarrow{\alpha_1}$ and $\overrightarrow{\alpha_2}$, where

$$\vec{x} = \alpha_{01} \begin{pmatrix} \sin\theta_1 \\ 0 \\ \cos\theta_1 \end{pmatrix} + \alpha_{02} \begin{pmatrix} 0 \\ \sin\theta_2 \\ \cos\theta_2 \end{pmatrix} \text{ and } \langle \overrightarrow{\alpha_1}, \overrightarrow{\alpha_2} \rangle = 0. \tag{13}$$

**Example**

As an example, a square cell having a square cell size of $A=1\ cm^2$ is selected. Further, a foil thickness of $t = 500\ \mu m$, is selected. The testing carrier material is polyethylene terephthalate, PET, with a Young's Modulus of $E=4500$

*MPa.* The substrate consists of Silver, Ag, with specific resistance of σ=1.6 10⁻⁸ Ωm²/m.

In order to calculate the change in resistance we use

$$\Delta R = \frac{\sigma}{bd} \Delta L \qquad (14)$$

with *b* being the strand width and *d* being the substrate thickness. Assuming a thickness *d* of *d=100 nm* and a strand width *b* of *b = 16μm,* and further assuming 10 consecutive strands, we arrive at *R = 1 kΩ* for the undeformed cell. A displacement *ω=1mm* yields, according to equation (4) and (5) Δ*R* = 7.5 Ω, which is easily detectable. Increasing the number of strands, while increasing the individual width increases the relative resistance change even further.

**Measurement**

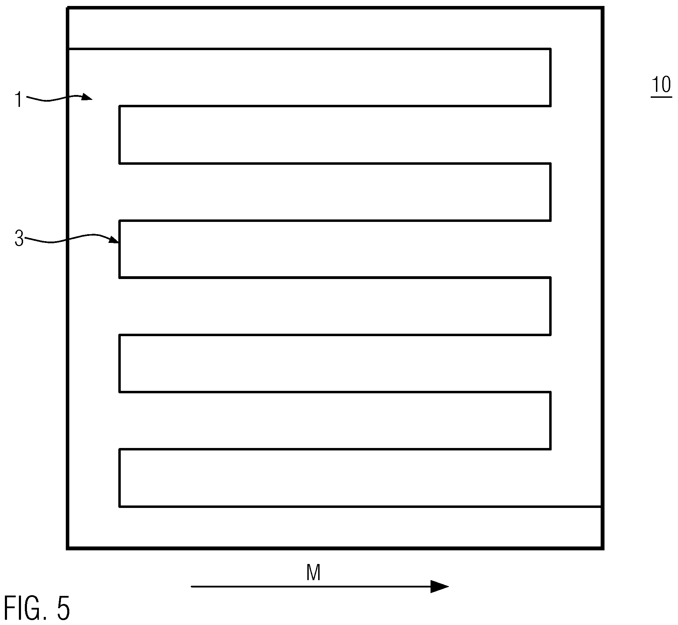

Figure 5 shows a schematic illustration of a unit cell 10 of a strain gauge sensor for the present disclosure. This unit cell 10 functions as an element in the matrices discussed above. The unit cell 10 corresponds to a strain gauge sensor having conductive lines 3 in a meander-like shape provided on a thin film 1. The conductive lines 3 in Fig. 3 are in this Figure and for illustrative purposes oriented horizontally. An arrow M indicates the direction of readout, which also is the direction to which all conductive lines of the unit cell are aligned. . The thin film 1 is a substrate or carrier substrate. This substrate may be a thin, i.e. flexible foil of polyethylene terephthalate, PET, foil. In particular, the PET foil having a stiffness of tensile modulus ~1000-10000 MPa Other materials for the substrate may be any kind of plastic which allow physical vapor deposition.

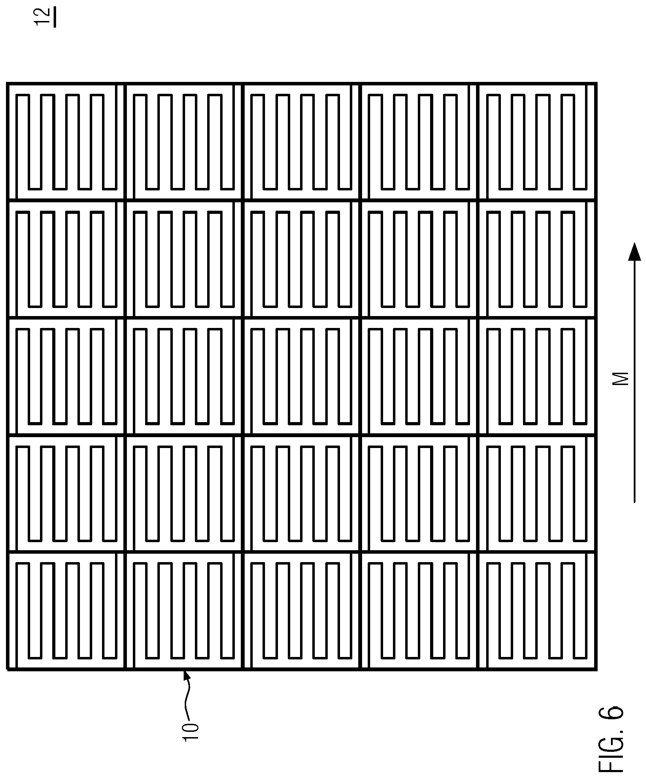

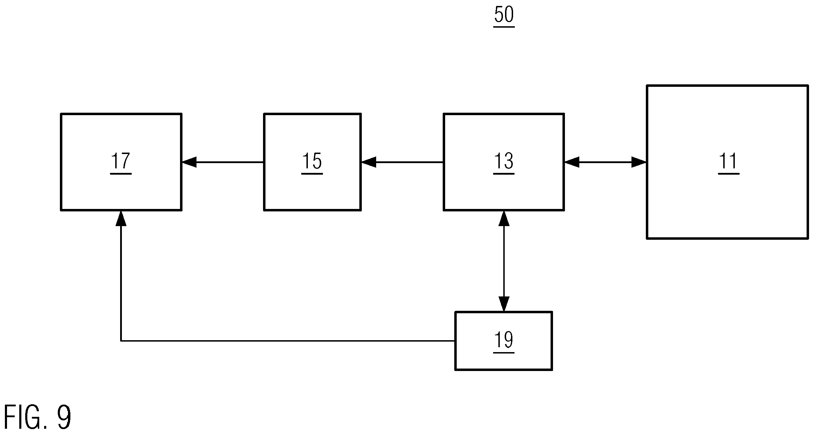

Several of the unit cells 10 as disclosed in Fig. 5 are shown in Figure 6. Figure 6 shows a schematic illustration of a matrix 12 of unit cells of strain gauge sensors, representing one layer, according to the present disclosure. Said matrix or layer 12 depicted in Fig. 6 has a quadratic shape with an equal number of rows and columns. In particular, matrix 12 shows 20 unit cells 10 arranged as a 5x5 matrix. It should be understood that these numbers are for purely illustrative purposes and that other shapes which may be rectangular but not quadratic may be chosen and where the number of rows and columns may be different. It should be pointed out, that the all unit cells are arranged to be oriented into the same direction. Thereby, also the readout direction M of all unit cells of the matrix 12 is the same. All unit cells 10 of the matrix 12 may be read out individually, see Fig. 9.

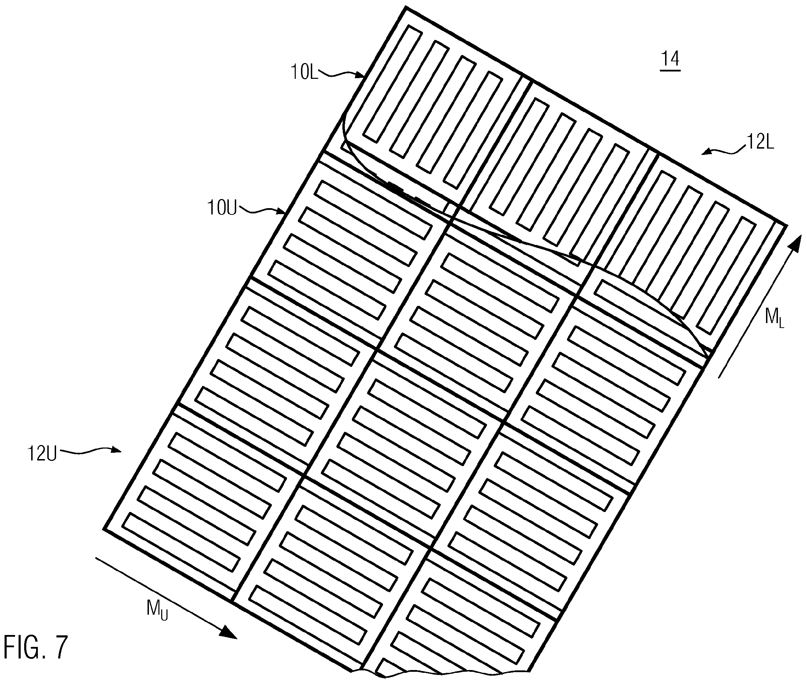

Figure 7 shows a schematic illustration of a pair 14 of matrices 12U and 12L. The matrices 12U and 12L each may be similar or typically may be the same as the matrix 12 shown in Fig. 7. Here, for illustrative purposes only, matrix 12U is the upper matrix of the pair, whereas matrix 12L is the lower matrix of the pair 14. Here, the terms "upper" and "lower" should mean only that in the illustration of Fig. 7 matrix 12U is provided directly above matrix 12L. Figure 7 further illustrates that for matrix 12U the readout direction for all of its unit cells 10U is given by direction M_U. Similarly, for matrix 12L, layered directly below matrix 12U, the readout direction for its unit cells 10L is given by readout direction M_L.

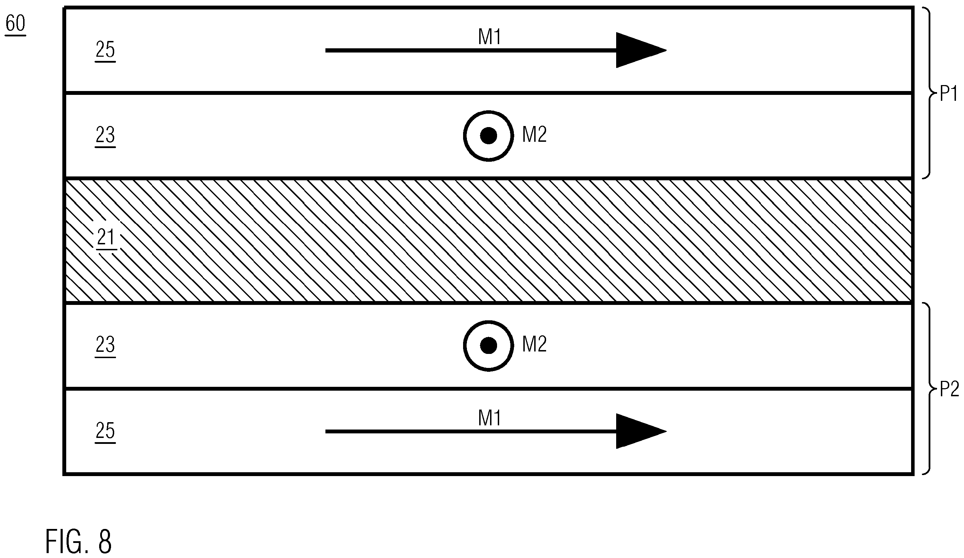

Figure 8 shows a schematic illustration of a cross section of a strain gauge measurement blanket 60 according to the present disclosure. In Fig. 8, said blanket 60 comprises a substrate 21, such as a foil or the like is shown in the middle of Fig. 8. Atop of the substrate 21 a pair P1 of matrices of strain gauge sensors 23 and 25 is shown. Said pair P1 of matrices of strain gauge sensors may be the same as the pair of matrices of strain gauge sensors shown in Fig. 7. In Fig. 8, for the first matrix 23 of the pair P1 said first matrix 23 being provided directly on the foil 21, the readout direction of said matrix 23 is indicated by M2. Here, for illustrative purposes, said readout direction M2 is perpendicular to the plane of viewing of this figure. In view of the discussion of Figures 5, 6, and 7 it should be understood that said matrix 23 comprises a plurality of unit cells of strain gauge sensors (not shown in Fig. 8) which are each aligned with respect to the same direction and said same direction is indicated by M2.

Likewise, in Fig. 8, for the second matrix 25 of the pair P1, which is provided directly above the first matrix 23, the readout direction of said matrix 25, is indicated by M1. Here, for illustrative purposes, said readout direction M1 is horizontal in the plane of viewing of this figure. In view of the discussion of Figures 5, 6, and 7 it should be understood that said matrix 25 also comprises a plurality of unit cells of strain gauge sensors (not shown in Fig. 8) which are each aligned with respect to the same direction and said same direction is indicated by M1.

In Fig. 8, another pair P2 is illustrated as being provided directly below the substrate 21. Said pair P2 comprises matrices 23 and 25, which are the same as for the pair P1, described above.

By providing the blanket 60 with at least two pairs P1 and P2 of matrices of strain gauge sensors, the coordinates of curvature may be sufficiently determined. Providing an even larger number of matrices or layers of strain gauge sensors may provide further redundancy, which may be used minimizing measurement errors.

Figure 9 illustrates a schematic illustration of a system 50 for curvature measurement according to the present disclosure. In Fig. 9, a plurality of strain gauge sensors, e.g. a blanket such as the blanket 60 discussed with respect to Fig. 8 should be read out. Each element of each blanket, i.e. each sensor 11 of the respective matrices, is read out for its measured data separately by multiplexing. For this purpose a multiplexer 13 is used. Said multiplexer 13 is controlled by a clock 19. The multiplexer 19 provides the read out data to a resistance meter 15, i.e. an Ohmmeter. Said resistance meter 15 may use well-understood resistance measurement method, for example by employing a Wheatstone bridge for this measurement. The resistance meter 15 is further connected to a control unit 17 such as a computer. Said control unit 17 is also controlled by the clock 19. Thereby, all elements are connected to their neighbors in measurement direction and are read by applying a voltage to the element with the multiplexer. The elements are measured sequentially in such a way, that the resistance of the prior element can be subtracted from the current measurement. Further, due to the clock, the readout may be performed quasi in real-time.

**Possible Applications**

The entire blanket 60 of Fig. 8 together with its readout discussed with respect to Fig. 9 may be used in an overlay scheme to determine curvatures of three-dimensionally curved objects.
In addition, whereas in the above a blanket 60 was shown which according to Fig. 9 might be read out in real-time, the substrate of said blanket 60 may either be substituted or else integrated into specific applications. Thus, this may be implemented as sensor for flexible displays to compensate the curvature on the fly. Further, such a blanket may be integrated into a glove for VR controls, thereby provided a real time positioning sensor.
A different application may be a waterbed mattress with active pressure compensation or an orthopedic foot measurement sensor for pressure distribution. Further, this may be integrated into a portable PET scanner.

**Claims**

1.  Strain gauge measurement blanket (60) comprising:

    a substrate (21) having an upper surface and a lower surface;
    a plurality of matrices (12, 12U, 12L, 23, 25) of strain gauge sensors (10) provided on the substrate (21); each matrix (12, 12U, 12L, 23, 25) having a plurality of strain gauge sensors (10), all strain gauge sensors (10) within one matrix (12, 12U, 12L, 23, 25) being aligned into the same direction, respectively;
    said plurality of matrices (12, 12U, 12L, 23, 25) of strain gauge sensors (10) including at least a first, a second, a third and a fourth matrix (12, 12U, 12L, 23, 25) of strain gauge sensors (10);
    the first and the second matrix (12, 12U, 12L, 23, 25) of strain gauge sensors (10) layered directly on top of each other and being provided directly on the upper surface of the substrate (21);
    the third and the fourth matrix (12, 12U, 12L, 23, 25) of strain gauge sensors (10) layered directly on top of each other and being provided directly on the lower surface the substrate (21);
    the strain gauge sensors (10) of the first matrix (12, 12U, 12L, 23, 25) being oriented perpendicular to the strain gauge sensors (10) of the second matrix (12, 12U, 12L, 23, 25);
    the strain gauge sensors (10) of the third matrix (12, 12U, 12L, 23, 25) being oriented perpendicular to the strain gauge sensors (10) of the fourth matrix (12, 12U, 12L, 23, 25).

2.  Strain gauge measurement blanket (60) according to claim 1, wherein the strain gauge sensors (10) within one matrix (12, 12U, 12L, 23, 25) are the same; in particular, wherein the strain gauge sensors (10) of all matrices (12, 12U, 12L, 23, 25) are the same.

3.  Strain gauge measurement blanket (60) according to claim 1 - 2, wherein the strain gauge sensors (10) of each matrix (12, 12U, 12L, 23, 25) are adjacently arranged.

4.  Strain gauge measurement blanket (60) according to one of claims 1 - 3, wherein the substrate (21) is a polyethylene terephthalate, PET, foil, in particular the PET foil having a stiffness of Tensile modulus ~1000-10000 MPa.

5.  System (50) for curvature measurement comprising
    a strain gauge measurement blanket (60) according to one of claims 1 - 4;
    a multiplexer (19) connected to the sensors of the strain gauge measurement blanket (60);
    a resistance meter (15) connected to the multiplexer (19);
    a control unit (17) connected to the resistance meter (15); and
    a clock (19) connected at least to the control unit (17) and the multiplexer (19).

6.  System (50) according to claim 5, wherein the system (50) is configured to conduct the curvature measurement using the strain gauge measurement blanket (60) in real-time.

7. System (50) according to claim 5 or 6, wherein the system (50) is configured to be integrated into one or more of a flexible display of a mobile device such as a smartphone, a mobile phone, a tablet, a phablet, a mobile computer, a virtual reality, VR, control, a water bed mattress with active pressure compensation, or a portable positron emission tomography scanner.

8. System (50) according to claim 7, wherein the substrate (21) is part of the flexible display.

9. Method of manufacturing a strain gauge measurement blanket (60) comprising the steps of:

providing a substrate (21) having an upper surface and a lower surface;
providing a first thin conductive film on the upper surface of the substrate (21);
etching a plurality of strain gauge sensors (10) into the first thin conductive film in a matrix (12, 12U, 12L, 23, 25); all of said strain gauge sensors (10) within the first conductive film being aligned into the same direction, respectively;
providing a second thin conductive film directly on the first thin conductive film;
etching a plurality of strain gauge sensors (10) into the second thin conductive film in a matrix (12, 12U, 12L, 23, 25); all of said strain gauge sensors (10) within the second conductive film being aligned into the same direction, respectively;
providing a third thin conductive film on the lower surface of the substrate (21);
etching a plurality of strain gauge sensors (10) into the third thin conductive film in a matrix (12, 12U, 12L, 23, 25); all of said strain gauge sensors (10) within the third conductive film being aligned into the same direction, respectively;
providing a fourth thin conductive film directly on the third thin conductive film;
etching a plurality of strain gauge sensors (10) into the fourth thin film in a matrix (12, 12U, 12L, 23, 25); all of said strain gauge sensors (10) within the fourth thin conductive film being aligned into the same direction, respectively;
the strain gauge sensors (10) of the first thin conductive film being oriented perpendicular to the strain gauge sensors (10) of the second thin conductive film;
the strain gauge sensors (10) of the third thin conductive film being oriented perpendicular to the strain gauge sensors (10) of the fourth thin conductive film.

10. Method according to claim 9, wherein the strain gauge sensors (10) with one thin conductive film are the same, in particular wherein all of the strain gauge sensors (10) are the same.

11. Method according to claim 9 or 10, wherein the strain gauge sensors (10) within each thin conductive film are adjacently arranged.

12. Method according to one of claims 9 - 11, wherein the substrate (21) is a polyethylene terephthalate, PET, foil, in particular the PET foil having a stiffness of Tensile modulus ~1000-10000 MPa.

13. Method according to one of claims 9 - 12, further comprising the step of providing further thin conductive films on the upper surface and/or on the lower surface of the substrate (21), and etching a plurality of strain gauge sensors (10) into the respective thin conductive film in a matrix (12, 12U, 12L, 23, 25); all of said strain gauge sensors (10) within the respective conductive film being aligned into the same direction, respectively; wherein the strain gauge sensors (10) of one further thin conductive film are oriented perpendicular to the strain gauge sensor of another thin conductive film directly underneath the further conductive film.

FIG. 1A

FIG. 1B

FIG. 2

EP 3 671 107 A1

FIG. 3B

FIG. 3A

FIG. 4

FIG. 5

FIG. 6

FIG. 7

EP 3 671 107 A1

EP 3 671 107 A1

60

25      M1 →

23      ⊙ M2

P1

21

23      ⊙ M2

25      M1 →

P2

FIG. 8

FIG. 9

Europäisches
Patentamt

European
Patent Office

Office européen
des brevets

# EUROPEAN SEARCH REPORT

**Application Number**

EP 18 21 3819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 206 108 A2 (SAMSUNG ELECTRONICS CO LTD [KR]) 16 August 2017 (2017-08-16) | 1-13 | INV.<br>G01B7/16 |
| Y | * paragraphs [0088] - [0134]; claim 1; figures 1-12 * | 1-13 | G01B7/287<br>G01L1/22 |
| X | US 2017/176167 A1 (KELLER SEAN JASON [US] ET AL) 22 June 2017 (2017-06-22) | 1-13 | ADD.<br>G06F1/16 |
| Y | * paragraphs [0066], [0073] - [0087]; figures 7A-C, 9 * | 1-13 | |
| Y | WO 2017/094368 A1 (NISSHA PRINTING [JP]) 8 June 2017 (2017-06-08) <br> * abstract * <br> * paragraphs [0020] - [0073]; figures 1-19 * | 1-13 | |
| Y | US 2014/015745 A1 (CHAE BYOUNG-DUCK [KR] ET AL) 16 January 2014 (2014-01-16) <br> * paragraphs [0029] - [0039]; figures 1-3 * | 1-13 | |

| | |
|---|---|
| | TECHNICAL FIELDS SEARCHED (IPC) |
| | G01B<br>G01L<br>G06F |

The present search report has been drawn up for all claims

| Place of search | Date of completion of the search | Examiner |
|---|---|---|
| Munich | 31 May 2019 | Burkart, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 21 3819

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2019

| Patent document cited in search report | | Publication date | Patent family member(s) | Publication date |
|---|---|---|---|---|
| EP 3206108 | A2 | 16-08-2017 | CN 104583911 A | 29-04-2015 |
| | | | EP 2885689 A1 | 24-06-2015 |
| | | | EP 3206108 A2 | 16-08-2017 |
| | | | KR 20140024145 A | 28-02-2014 |
| | | | RU 2015109723 A | 10-10-2016 |
| | | | US 2014049464 A1 | 20-02-2014 |
| | | | US 2015331496 A1 | 19-11-2015 |
| | | | US 2017262070 A1 | 14-09-2017 |
| | | | WO 2014030912 A1 | 27-02-2014 |
| US 2017176167 | A1 | 22-06-2017 | NONE | |
| WO 2017094368 | A1 | 08-06-2017 | JP 2017101983 A | 08-06-2017 |
| | | | WO 2017094368 A1 | 08-06-2017 |
| US 2014015745 | A1 | 16-01-2014 | KR 20140008897 A | 22-01-2014 |
| | | | US 2014015745 A1 | 16-01-2014 |

EPO FORM P0459

For more details about this annex : see Official Journal of the European Patent Office, No. 12/82